(19) **Europäisches Patentamt**
**European Patent Office**
**Office européen des brevets**

(11) **EP 1 172 685 A1**

(12) **EUROPEAN PATENT APPLICATION**
published in accordance with Art. 158(3) EPC

(43) Date of publication:
16.01.2002 Bulletin 2002/03

(51) Int Cl.⁷: **G02F 1/1337**, G02F 1/137

(21) Application number: 01904399.1

(22) Date of filing: 13.02.2001

(86) International application number:
**PCT/JP01/00986**

(87) International publication number:
**WO 01/59514 (16.08.2001 Gazette 2001/33)**

(84) Designated Contracting States:
**AT BE CH CY DE DK ES FI FR GB GR IE IT LI LU MC NL PT SE TR**

(30) Priority: 10.02.2000 JP 2000032905

(71) Applicant: **MATSUSHITA ELECTRIC INDUSTRIAL CO., LTD.**
**Kadoma-shi, Osaka 571-8501 (JP)**

(72) Inventors:
• **ISHIHARA, Shoichi**
**Katano-shi, Osaka 576-0034 (JP)**

• **TANAKA, Yoshinori**
**Hirakata-shi, Osaka 573-1112 (JP)**
• **NAKAO, Kenji**
**Osaka-shi, Osaka 535-0031 (JP)**
• **HATTORI, Katsuji**
**Takarazuka-shi, Hyogo 665-0002 (JP)**
• **UEMURA, Tsuyoshi**
**Kadoma-shi, Osaka 571-0063 (JP)**

(74) Representative:
**Dempster, Benjamin John Naftel et al**
**Withers & Rogers, Goldings House, 2 Hays Lane**
**London SE1 2HW (GB)**

(54) **LIQUID CRYSTAL DISPLAY ELEMENT AND METHOD FOR FABRICATING THE SAME**

(57)    A liquid crystal display having a high transition speed in which bend alignment is formed easily upon application of a voltage of several volts by subjecting an alignment film, which can impart liquid crystal molecules with a pretilt angle of 15-90°, to parallel alignment. A liquid crystal display requiring no transition operation can also be provided. Furthermore, a liquid crystal display of OCB mode excellent in practicality can be provided because of excellent field angle characteristics.

Fig. 1

**Description**

TECHNICAL FIELD

The present invention relates to liquid crystal display devices applied to display devices for computers, television systems, and the like, and also to methods of manufacturing these devices. More particularly, the present invention relates to liquid crystal display devices with a fast response time and wide viewing angle characteristics, and also to methods of manufacturing these devices.

BACKGROUND ART

Along with the advancement of multimedia technology, image information has steadily increased. In recent years, with the development of liquid crystal technology, liquid crystal display devices with high contrast and wide viewing angles have been developed and put into practical use, reaching a level comparable to that of CRT display devices.

As conventional liquid crystal display devices, for example, liquid crystal display devices operated in twisted nematic (TN) mode using a nematic liquid crystal and liquid crystal display devices operated in polymer-dispersed liquid crystal display mode using light scattering are well known. However, there are drawbacks to these liquid crystal display devices. Since the devices have a slow response time and narrow viewing angles, it is difficult to apply the devices to display devices that require fast moving image display and good visibility even from oblique directions.

The response time of a liquid crystal display device is the time required for a liquid crystal to change into a driving state after a driving voltage has been applied to the liquid crystal. When a voltage is applied to the liquid crystal, the liquid crystal aligns in a specified direction and sets in the driving state. However, the liquid crystal molecules require a fixed amount of time to be completely aligned in the alignment direction; such time is called "response time." If the response time is slow, when, for example, displaying moving images, previous images remain, resulting in a liquid crystal display device which has particularly poor moving image performance.

Many attempts have been made in prior art to make the response of liquid crystal display devices high-speed. A variety of liquid crystal display modes that provide a sufficiently fast response time are introduced by Wu et al. (C. S. Wu and S. T. Wu, SPIE 1665, 250 (1992)); however, only a limited number of modes and methods are available that seem to provide the response characteristics required for moving image display.

That is, in the current NTSC system, a liquid crystal needs to respond within one frame period (16.7 msec). Current liquid crystal displays provide a sufficiently fast response time for binary black and white display, but for multi-level gray-scale display, the displays show a slow response of 100 msec or more between gray scale levels. In particular, in low driving voltage regions the response between gray scale levels is extremely slow.

Currently, as fast response liquid crystal displays suitable for moving image display, ferroelectric liquid crystal display devices, anti-ferroelectric liquid crystal display devices, and so forth are being proposed.

However, since ferroelectric liquid crystal display devices and anti-ferroelectric liquid crystal display devices have layered structures, there are many practical problems such as poor shock resistance, narrow operating temperature range, temperature dependence of the characteristics, and the like.

On the other hand, optically compensated bend (OCB) mode liquid crystal display devices using a nematic liquid crystal are considered to be promising liquid crystal display devices suitable for moving image display. These OCB mode liquid crystal display devices have a display mode whose high-speed properties were demonstrated by J. P. Boss in 1983. Later, it was recognized that when the devices were used in combination with film retardation plates, the displays demonstrated both wide viewing angles and a fast response time. This spurred active research and development.

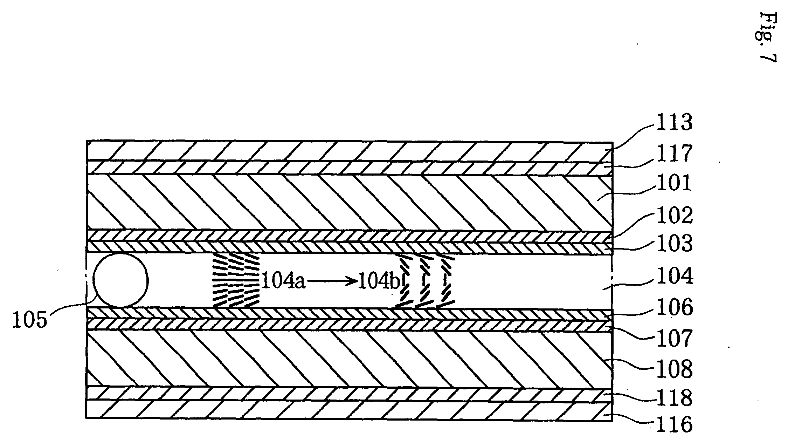

OCB mode liquid crystal display devices include, for example, as shown in Fig. 7, a glass substrate 101 having formed thereon a transparent electrode 102, a glass substrate 108 having formed thereon a transparent electrode 107, and a liquid crystal layer 104 disposed between the substrates 101 and 108. Alignment films 103 and 106 are formed on the electrodes 102 and 107, respectively. The alignment films 103 and 106 are subjected to an alignment treatment so that liquid crystal molecules are aligned parallel in the same direction. In addition, on the outside surfaces of the substrates 101 and 108 polarizers 113 and 116 are arranged, respectively, to have a crossed Nicols relation. Between the polarizer 113 and the substrate 101 and between the polarizer 116 and the substrate 108, phase compensators 117 and 118, which optically compensate for liquid crystal alignment, are arranged, respectively.

A liquid crystal cell having such a structure is capable of inducing bend alignment or bend alignment including twisted alignment, in the central portion of the cell, by application of a voltage.

When bend alignment is provided such as described above, changes in the liquid crystal molecules are fast with respect to changes in the driving voltage applied between the electrodes 102 and 107, and thus a fast response time is achieved. In particular, also in a halftone display region where brightness variation is small, a fast response time can be exhibited. In addition, symmetrical bend alignment widens the viewing angle of the display screen in the vertical direction. At the same time, the phase compensators 117 and 118 widen the viewing angle of the display screen in the horizontal direction. The phase compensators 117 and 118 also contribute to a reduction in the driving voltage.

In such OCB mode liquid crystal display devices, an initialization process, whereby an initial splay alignment state changes to a bend alignment state by application of a voltage, is considered to be indispensable.

However, with application of voltages of a few volts, the above-described initialization process requires minutes. This is one of the problems with the OCB mode.

In view of the foregoing and other problems, it is an object of the present invention to provide a liquid crystal display device with a fast transition time in which bend alignment is obtained easily by application of voltages of a few volts. In addition, it is another object of the present invention to provide a liquid crystal display device that does not require transition control.

DISCLOSURE OF THE INVENTION

The present inventors have discovered that the foregoing problems can be overcome by carrying out a parallel alignment treatment on alignment films capable of providing predetermined pretilt angles to the liquid crystal molecules.

The present invention provides a liquid crystal display device comprising a liquid crystal cell having a first electrode arranged on a first transparent substrate, a second electrode arranged on a second transparent substrate, a first alignment film and a second alignment film covering the first electrode and the second electrode, respectively, the first alignment film and the second alignment film having been subjected to a parallel alignment treatment such that predetermined pretilt angles having the same direction are induced in liquid crystal molecules at each film, and a liquid crystal layer enclosed between the first substrate and the second substrate, display being brought about by providing bend alignment to the liquid crystal to change light transmissivity,

wherein the pretilt angle of at least one of the first alignment film and the second alignment film is in the range of from 15° to less than 90°.

With the above-described construction, the liquid crystal molecules with pretilt angles in the range of from 15° to less than 90° at the alignment films are standing up at a relatively large angle. Thus, when a voltage is applied between the pixel electrode and the counter electrode, transition from splay alignment to bend alignment is accomplished in a short time and reliably. Moreover, the transition is accomplished with low electrical energy, and therefore the driving circuit will not become overloaded. In cases where the pretilt angle is large, the liquid crystal molecules are already in bend alignment prior to application of a voltage, making it possible to provide liquid crystal display devices that do not require transition control. In addition, the pretilt angle of one of the alignment films may be in the range of from 15° to less than 90° or may be less than 15°. When the pretilt angle of one of the alignment films is in the range of from 15° to less than 90°, bend alignment can be achieved more reliably. It should be noted that it is more preferable that the pretilt angles of the alignment films be in the range of from 15° to less than 45° when taking into consideration such factors as maintaining stable pretilt angles, maintaining liquid crystal alignment, and having uniform liquid crystal alignment.

The pretilt angle of the first alignment film and the pretilt angle of the second alignment film may be equal.

When the pretilt angle of the first alignment film and the pretilt angle of the second alignment film are equal, excellent symmetry is achieved in terms of viewing angle, thus it is preferable.

A phase compensator may be arranged on at least one of the first electrode side and the second electrode side, the phase compensator optically compensating for liquid crystal alignment. Use of the phase compensator further widens the viewing angle and lowers the driving voltage.

It is preferable that the phase compensator be at least one of a negative uniaxial retardation plate and a biaxial retardation plate.

In the OCB mode, in order to maintain stable bend alignment, it is necessary that the director of the liquid crystal molecules form, on average, a large angle with respect to the electrode substrates. Therefore, on average, the refractive index in the direction perpendicular to the substrate surface (i.e., the thickness direction of the cell) is lower than that in the direction within the plane of the substrate. For this reason, a compensator that is capable of compensating for the anisotropy, has a lower refractive index in the thickness direction of the film than in the direction within the plane of the substrate, and has a negative uniaxial structure is effective.

A biaxial retardation plate has retardation within the plane of the substrate and has a lower refractive index in the thickness direction than within the plane of the substrate. Thus, the biaxial retardation plate is capable of compensating for the colors and the viewing angle at the same time.

Further, the phase compensator may be a negative uniaxial retardation plate, the retardation plate having a retardation of less than 30nm when viewed from the front, the principal axis of the retardation plate being tilted. The phrase "retardation of less than 30nm when viewed from the front" is defined as

$$(n_x-n_y)d=\Delta nd <30nm,$$

where $n_x$ is the maximum refractive index within the plane of the substrate, ny is the refractive index in the direction orthogonal to the direction within the plane of the substrate, $n_z$ is the refractive index in the thickness direction, and d is the thickness of the retardation plate. By employing such a retardation plate, color shifts at viewing angles caused by the birefringence of the liquid crystal cell are highly compensated, preventing coloration, and thereby a liquid crystal display device excellent in terms of visibility such as contrast and black and white display can be provided. In particular, as the pretilt angles at the substrate surfaces are increased, the retardation of the liquid crystal layer gradually decreases. For this reason, a retardation plate, which compensates for retardation, must have a low retardation value when viewed from the front. Thus, the retardation when viewed from the front is made to be less than 30nm. In addition, the phrase "the principal axis of the retardation plate being tilted" includes, for example, a case where the principal axis of the retardation plate is in hybrid alignment or a case where the molecules that make up the retardation plate are not uniformly oriented in the same direction. The case "the molecules that make up the retardation plate are not uniformly oriented in the same direction" refers, for example, to a case where the molecular direction changes gradually in the thickness direction of the retardation plate. An example of such a retardation plate includes one using a discotic liquid crystal.

These liquid crystal display devices can be manufactured by, for example, the following method.

The present invention also provides a method of manufacturing a liquid crystal display device that changes light transmissivity to bring about display by providing bend alignment to liquid crystal provided between a pair of substrates, each of the substrates having an electrode and an alignment film arranged thereon, the method comprising the steps of:

forming an alignment film by forming a first thin film on each of the pair of substrates by obliquely evaporating an inorganic compound and forming a second thin film on each of the first thin films, the second thin films being composed of an organic compound;
carrying out an alignment treatment on each of the second thin films;
bonding the pair of substrates together such that the alignment treatment directions of the alignment films are substantially parallel to each other; and
injecting the liquid crystal between the pair of substrates to form a liquid crystal layer;
whereby the pretilt angles of liquid crystal molecules from the planes of the pair of substrates are set in the range of from 15° to less than 90°.

In this manufacturing method, first, oblique evaporation is performed using an inorganic compound, and then second thin films composed of an organic compound are formed. By this method, the pretilt angles of the second thin films composed of an organic compound are added to the pretilt angles of the first thin films composed of an inorganic compound, which is oblique evaporated, whereby larger pretilt angles can be attained.

In addition, by bonding the pair of substrates together such that the alignment treatment directions of the alignment films are substantially parallel to each other, parallel alignment of the liquid crystal molecules is achieved.

The alignment treatment may be carried out so that the second thin films have a pretilt angle of 5° or more with respect to the surfaces of the first thin films. By this process, larger pretilt angles can be attained.

The pretilt angle of each of opposing substrates are not necessarily equal, provided that the device is manufactured so that the pretilt angle of the liquid crystal molecules from the plane of at least one of the pair of substrates is set in the range of from 15° to less than 90°. A liquid crystal display device in which the pretilt angles of the opposing substrates differ can be manufactured by, for example, with a pair of substrates, changing the angle of oblique evaporation of the first thin films or changing the alignment conditions of the second thin films.

The second thin films may be formed of a polyimide resin. When a polyimide resin is used, an alignment treatment can be carried out by either rubbing or light irradiation.

In addition, it is also possible to perform oblique evaporation on the surfaces of the substrates at a relatively small angle and then apply a homeotropic alignment agent to the tilted surfaces.

Further, the alignment films may be formed by using other alignment treatment methods such as chemisorption, stamping, and the LB method.

In addition, instead of performing the oblique evaporation of an inorganic compound as described above, the alignment film may be formed directly on each of the substrate surfaces using an organic compound. In this case, the pretilt angles of the liquid crystal molecules from the planes of the substrates should be set in the range of from 15° to less than 90° by adjusting the light irradiation conditions or the rubbing conditions. The alignment films can be formed by chemisorption, the layering of resins, or the like.

Specifically, there are provided a method wherein a thin film composed of an organic compound is formed on each of the pair of substrates and an alignment treatment may be carried out by irradiating each of the thin films with light; a method wherein a thin film composed of an organic compound is formed on each of the pair of substrates and an alignment treatment may be carried out on each of the thin films by rubbing; and a method wherein by contacting the surfaces of the pair of substrates with a chemisorbent material having a photosensitive group to chemisorb the chemisorbent material onto the surfaces of the pair of substrates, an alignment film is formed on each of the pair of substrates and an alignment treatment may be carried out by irradiating the alignment films with polarized light.

The alignment treatment may be carried out on each of the thin films arranged on the opposing substrates under differing alignment conditions, whereby the pretilt angle of the liquid crystal molecules from the plane of at least one of the pair of substrates is set in the range of from 15° to less than 90°.

The thin films may be formed by using known materials including, for example, a resin such as a polyimide or a chemisorbable molecule.

BRIEF DESCRIPTION OF THE DRAWINGS

Fig. 1 is a cross sectional view schematically showing the construction of a test cell of Example 1 used in a liquid crystal display device according to the present invention.

Fig. 2 is a diagram describing the relationship between the values of applied voltages at which the Gibbs free energy with respect to splay alignment and the Gibbs free energy with respect to bend alignment are made equal and the pretilt angles.

Fig. 3 is a diagram illustrating an alignment treatment method used in Example 1.

Fig. 4 is a diagram showing the voltage-brightness characteristics of the liquid crystal display device of Example 2.

Fig. 5 is a diagram showing the voltage-brightness characteristics of the liquid crystal display device of Example 3.

Fig. 6 is a cross sectional view schematically showing the construction of a liquid crystal display device of Example 4.

Fig. 7 is a view illustrating the splay-bend transition in an OCB mode liquid crystal display device induced by applying a voltage for initialization.

BEST MODE FOR CARRYING OUT THE INVENTION

Embodiment 1

Now the present invention will be described in detail hereinafter with reference to the drawings.

A liquid crystal display device of the present invention is an OCB mode liquid crystal display device in which the initial alignment state is bend alignment or splay alignment that transitions to a bend alignment state with only the inputting of common video signals.

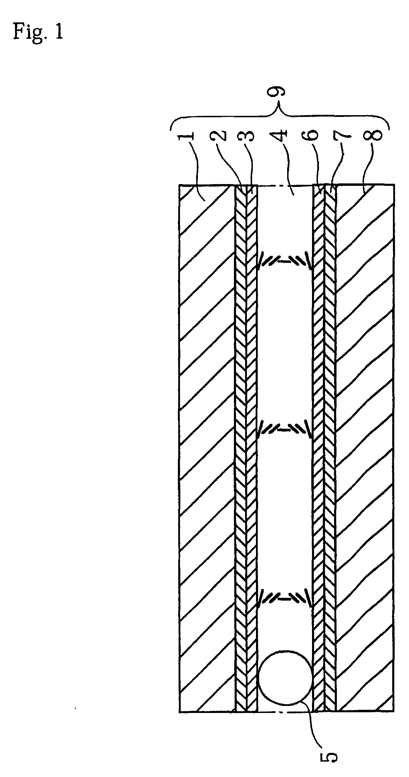

Fig. 1 is a diagram showing the construction of a liquid crystal cell according to a liquid crystal display device of the present invention.

A first transparent substrate 1 and a second transparent substrate 8 have a first electrode 2 and a second electrode 8, respectively, arranged thereon. On the first electrode 2 and the second electrode 8, alignment films 3 and 6 are formed, respectively. Between the first transparent substrate 1 and the second transparent substrate 2, a liquid crystal 4 is enclosed.

One example of the above-described liquid crystal 4 includes a nematic liquid crystal with positive dielectric anisotropy such as MJ96435 (with a refractive index anisotropy of $\Delta n = 0.138$), available from Merck Japan, Ltd.

The alignment films 3 and 6 arranged on the first transparent substrate 1 and the second transparent substrate 8, respectively, are aligned in the same direction. The pretilt angle of the liquid crystal molecules is in the range from 15° to less than 90° at at least one of the alignment films. When the pretilt angle of the liquid crystal molecules is within the above-described range, the liquid crystal molecules are in bend alignment in the initial alignment state or in splay alignment that can be transitioned to a bend alignment state with only the inputting of common video signals. When the pretilt angle of the liquid crystal molecules is in the range of from 45° to less than 90°, the liquid crystal molecules are in bend alignment in the initial alignment state. Consequently, a driving circuit for the splay-bend transition is not necessary and thus it is possible to simplify the device construction. On the other hand, when the pretilt angle of the liquid crystal molecules is in the range of from 15° to less than 45°, a fast and proper bend alignment is achieved with low voltages, and also since the pretilt angle is not so large, display degradation does not take place, making it possible to provide liquid crystal display devices that meet the conditions attendant with actual use.

The alignment films may be formed using either an inorganic material or an organic material, provided that the above-described pretilt angle can be obtained.

Examples of an inorganic material include metal oxides, such as oxidized silicon (SiO) and magnesium oxide (MgO), magnesium fluoride, and gold. When an inorganic material is used, an oblique evaporation is performed, and thus by setting the evaporation angle (to about 5° to 30°), film formation and an alignment treatment are accomplished at the same time.

Examples of an organic material include resins such as a polyimide and polyvinyl alcohol, a chemisorbent material capable of chemically bonding to the substrate such as a silane compound, and a material capable of forming an LB film such as a polyamic acid. Using an organic material requires an alignment treatment. The alignment treatment is carried out by known methods including rubbing of the substrate surface in the same direction, irradiation with polarized UV light, and the like.

The alignment film may be formed of a single layer comprising a single material or may be formed of multiple layers using various materials. For example, an organic thin film may be formed on a thin film composed of an inorganic material.

When the alignment film is formed of multiple layers, it is possible to use a homeotropic alignment agent such as lecithin as an organic material for an organic thin film, in addition to the above-described organic materials.

The first transparent substrate 1 and the second transparent substrate 8 are bonded together such that the above-described alignment films 3 and 6 are aligned in the same direction, spherical spacers 5 being interposed between the substrates. Thus a liquid crystal cell 9 is obtained. Polarizers may be arranged on both sides of the above-described liquid crystal cell 9.

A phase compensator may be arranged between the first transparent substrate 1 and one of the polarizers and/or between the second transparent substrate 8 and one of the polarizers. In addition, a negative uniaxial retardation plate and a biaxial retardation plate may be used individually or in combination.

Furthermore, it is also possible to use a negative uniaxial retardation plate that has a retardation of less than 30nm when viewed from the front and has its principal axis tilted.

Particularly when the pretilt angles of the opposing substrates differ, in order to achieve optimum viewing angle compensation, retardation plates can be used by appropriately selecting the number, type, and combination of retardation plates to be used, the position where the retardation plates are to be arranged, and so forth. In addition, the retardation plates may be arranged on one side or both sides of the liquid crystal cell 9.

EXAMPLE 1

A polyimide alignment film coating material JALS-204, available from JSR Corporation, was applied, by spin coating, over the whole surfaces of transparent electrodes 2 and 7 formed on two transparent substrates 1 and 8 composed of glass, and the resulting films were then dried and cured for one hour in a thermostatic bath at 180°C. Subsequently, the films were irradiated with polarized UV light with a wavelength of 365nm for five minutes at an angle of 30° from a direction normal to the substrates.

The substrates were bonded together using Struct Bond 352A, available from Mitsui Toatsu Chemicals, Inc., such that a first alignment film and a second alignment film were arranged in opposition so that predetermined pretilt angles having the same direction were induced in the liquid crystal molecules at each film, spacers 5, available from Sekisui Fine Chemical Corporation, being interposed between the substrates to provide a 6.5μm gap therebetween. Thus, a liquid crystal cell 9 (liquid crystal cell A) was prepared.

Similarly, liquid crystal cells B to L were prepared in which the above-described irradiation times of polarized UV light were 10 minutes, 15 minutes, 20 minutes, 25 minutes, 30 minutes, 35 minutes, 40 minutes, 45 minutes, 50 minutes, 55 minutes, and 60 minutes, respectively.

Next, a liquid crystal MJ96435 (with a refractive index anisotropy Δn = 0.138) was injected into the above-described liquid crystal cells A to L by a vacuum filling method, thus obtaining test cells A to L.

Then, polarizers were bonded to the above-described test cells A to L such that the polarization axes of the polarizers formed an angle of 45° with respect to the direction of average alignment of the liquid crystal molecules and were orthogonal to each other. By applying a square wave voltage of 6V, the transition from splay alignment to bend alignment was observed and the time required for the entire region of the electrodes (the electrode area is 2 cm$^2$) to transition from splay alignment to bend alignment was measured.

In addition, by employing the manufacturing conditions of each of the above-described liquid crystal cells, liquid crystal cells for evaluating pretilt angles were prepared. Specifically, the cells had the liquid crystal layers with a thickness of 15μm and the substrates bonded together such that the liquid crystal molecules were aligned anti-parallel. Then, cells HA to HL were measured.

Table 1 shows the measured values of the pretilt angles, the observation results in the initial alignment states, and the times required to transition from splay alignment to bend alignment.

Table 1

| Test Cell | Pretilt Angle (°) | Initial Alignment State | Time Required for Transitioning to Bend Alignment (sec.) |
|---|---|---|---|
| A | 3 | Splay | 1200 |
| B | 8 | Splay | 725 |
| C | 15 | Splay | 280 |
| D | 22 | Splay | 70 |
| E | 29 | Splay | 12 |
| F | 32 | Splay | 5 |
| G | 40 | Splay | 1 |
| H | 47 | Bend | * |
| I | 55 | Bend | * |
| J | 68 | Bend | * |
| K | 80 | Bend | * |
| L | 88 | Bend | * |
| * : Bend transition is not necessary. | | | |

As can be seen from the above results, in the test cells with a pretilt angle of 47° or more the liquid crystal molecules were already in bend alignment in the initial alignment state and therefore did not require transition control from splay alignment to bend alignment.

As is clear from Table 1, in the liquid crystal cells with a pretilt angle in the range of from 15° to less than 90° that are used in the liquid crystal display devices of the present example, the transition times required for bend alignment are short. Therefore, without the need for additional driving circuits for the splay-bend transition, the bend transitions were accomplished in a short time with only the inputting of a common video signal of about 6V.

It should be noted that the present example used a square wave voltage. As a result, for example, in the test cell C with a pretilt angle of 15°, the time required for transitioning to bend alignment was 280 seconds. On the other hand, by experimenting with the application of various wave-shapes during operation, the time required for transitioning to bend alignment was reduced to about 1/5 of the above time. Consequently, it was found that when the pretilt angle is 15° or more, liquid crystal display devices with fast transition times, which are advantageous in actual use, can be obtained.

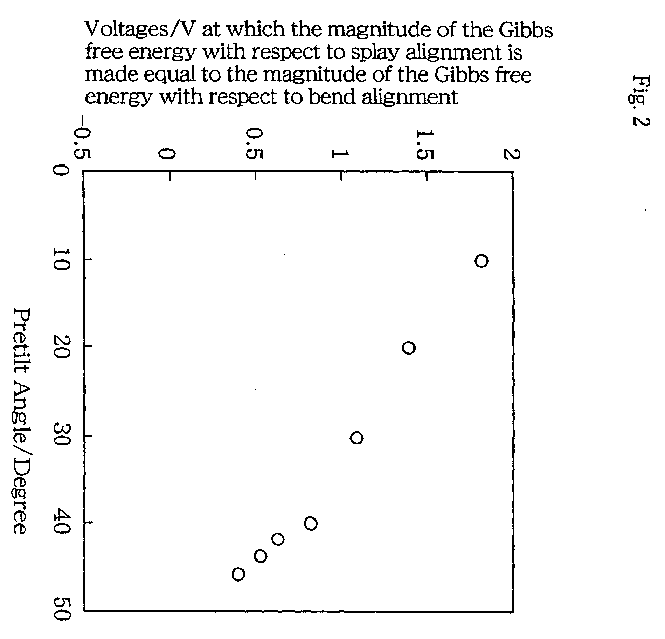

The Gibbs free energy is a state energy that varies with the alignment states of a liquid crystal. Fig. 2 shows calculated values of applied voltages at which the Gibbs free energy with respect to splay alignment and the Gibbs free energy with respect to bend-splay alignment are made equal versus pretilt angles, the values calculated using the material properties of the liquid crystal material MJ96435. As is clear from Fig. 2, when the pretilt angle is 47° to 48° or more, bend alignment is more stable than splay alignment. This fact corresponds with the results of the present example.

EXAMPLE 2

A liquid crystal cell M having the same construction as that of Fig. 1 was prepared as follows in a manner similar to that described in Example 1.

A polyimide alignment film coating material JALS-204, available from JSR Corporation, was applied, by spin coating, over the whole surfaces of transparent electrodes 2 and 7 formed on two transparent substrates 1 and 8 composed of glass, and the resulting films were then dried and cured for one hour in a thermostatic bath at 180°C.

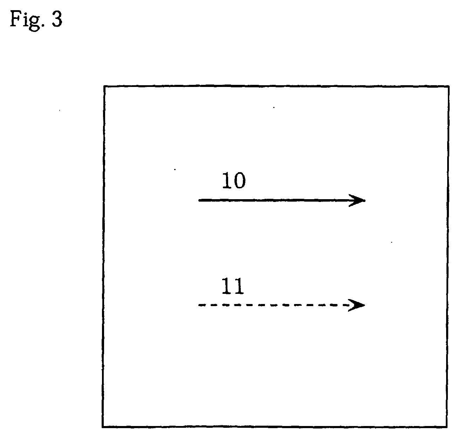

Then, a first alignment film and a second alignment film were subjected to a rubbing treatment in the direction shown in Fig. 3 so that predetermined pretilt angles having the same direction were induced in liquid crystal molecules at each film.

The substrates were bonded together using Struct Bond 352A, available from Mitsui Toatsu Chemicals, Inc., such that the first alignment film and the second alignment film were arranged in opposition, spacers 5, available from Sekisui Fine Chemical Corporation, being interposed between the substrates to provide a 5.3μm gap therebetween. Thus, a liquid crystal cell 9 (liquid crystal cell M) was prepared.

Then, a liquid crystal MJ96435 (with a refractive index anisotropy Δn = 0.138) was injected into the above-described liquid crystal cell M by a vacuum filling method, and thus a test cell M was obtained. In addition, a cell with homogeneous alignment was prepared and the pretilt angle was measured. With the rubbing conditions of the present example, the pretilt angle was 78°.

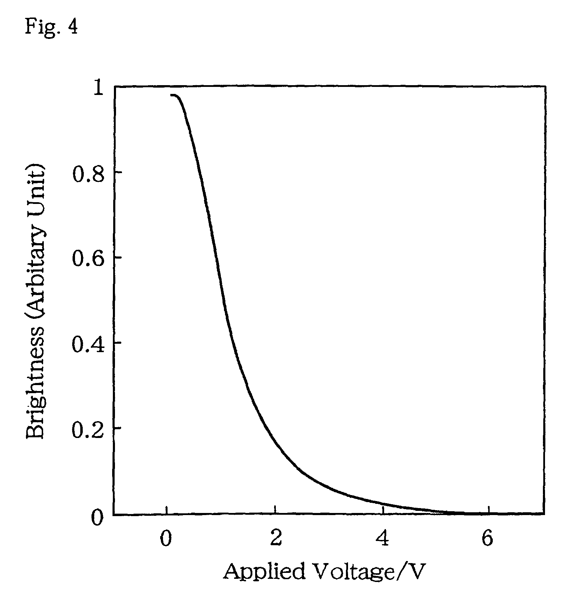

Next, polarizers were bonded to the test cell M such that the polarization axes of the polarizers formed an angle of 45° with respect to the rubbing treatment direction of the alignment films and were orthogonal to each other, a positive uniaxial retardation plate with a retardation of 35nm being interposed between each polarizer and each substrate to compensate for the residual retardation of the liquid crystal layer. Then, voltage-brightness characteristics were measured; the results are shown in Fig. 4. In addition, the response time between two states was measured by applying a voltage of 0.2V, which corresponds to the lowest driving voltage at which there is a gray scale response when displaying gray scale of 8, and a voltage of 0.5V. The rise time of response was 6 msec and the fall time of response was 9 msec.

As can be seen from Fig. 4 and the results of the response time measurement, it was confirmed that in the test cell M of the present example the liquid crystal molecules were in bend alignment. That is, in the test cell M of the present example, the liquid crystal molecules already exhibited a bend alignment state in the initial alignment stage and therefore did not require the splay-bend transition control.

It should be noted that the retardation required for the retardation plate is not limited to 35nm. This is because the retardation varies according to the values of driving voltage or transmissivity required.

EXAMPLE 3

A liquid crystal cell N was prepared in a manner similar to that described in Example 2, except that a different alignment film material was used.

SiO was obliquely evaporated over the whole surfaces of transparent electrodes 2 and 7 formed on two transparent substrates 1 and 8 composed of glass at an angle of 60° from the substrate normal. Next, on the surfaces of the SiO films, lecithin, which is a homeotropic alignment agent, was applied by spin coating and then dried for one hour in a thermostatic bath at 120°C.

The substrates were bonded together using Struct Bond 352A, available from Mitsui Toatsu Chemicals, Inc., such that a first alignment film and a second alignment film were arranged in opposition, spacers 5, available from Sekisui Fine Chemical Corporation, being interposed between the substrates to provide a 5.3μm gap therebetween. Thus, a liquid crystal cell 9 (liquid crystal cell N) was prepared.

Next, a liquid crystal MJ96435 (with a refractive index anisotropy Δn = 0.138) was injected into the above-described liquid crystal cell N by a vacuum filling method, and thus a test cell N was obtained. In addition, a cell with homogeneous alignment was prepared and the pretilt angle was measured. In the present example, the pretilt angle was 57°.

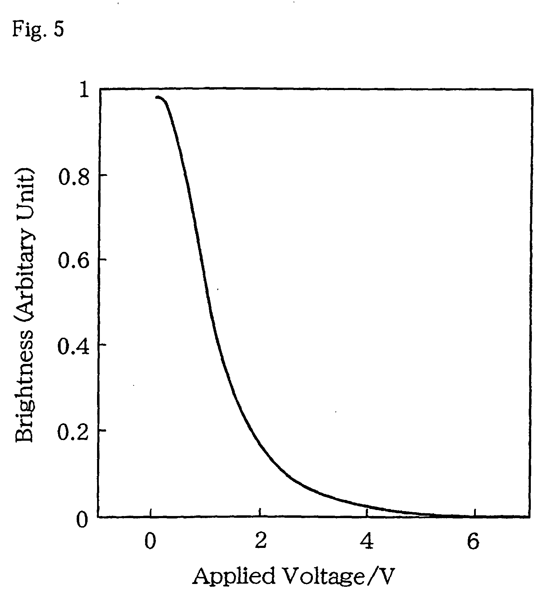

Subsequently, polarizers were bonded to the test cell N such that the polarization axes of the polarizers formed an angle of 45° with respect to the alignment treatment direction of the alignment films and were orthogonal to each other, a positive uniaxial retardation plate with a retardation of 32nm being interposed between each polarizer and each substrate to compensate for the residual retardation of the liquid crystal layer. Then, voltage-brightness characteristics were measured; the results are shown in Fig. 5. In addition, the response time between two states was measured by applying a voltage of 0.2V, which corresponds to the lowest driving voltage at which there is a gray scale response when displaying gray scale of 8, and a voltage of 0.5V. The rise time of response was 6 msec and the fall time of response was 7 msec.

As can be seen from Fig. 5 and the results of the response time measurement, it was confirmed that in the test cell N of the present example the liquid crystal molecules were in bend alignment. That is, in the test cell M of the present example, the liquid crystal molecules already exhibited a bend alignment state in the initial alignment stage and therefore did not require the splay-bend transition control.

By using a polyimide resin and a chemisorbent material in place of the homeotropic alignment agent, organic thin films were formed, and the films were subjected to an alignment treatment such as rubbing and light irradiation. Thus, liquid crystal cells were prepared. With these liquid crystal cells, the same effects were achieved as were achieved in the cell of the present example.

EXAMPLE 4

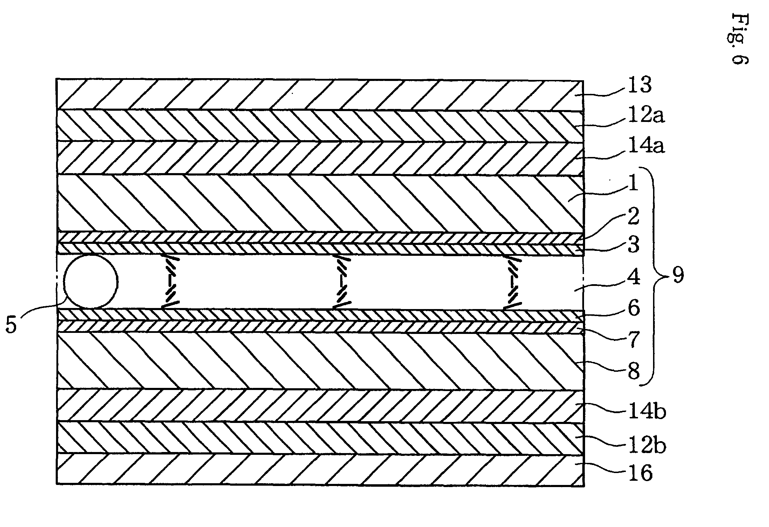

On the liquid crystal cell M prepared in Example 2, polarizers, negative uniaxial retardation plates, and biaxial retardation plates were layered, as shown in Fig 6, and thus a test cell P was prepared. At this point, the retardation Rth of the negative uniaxial retardation plates was 200nm, and the biaxial retardation plates Re and Rth were 30nm and 150nm, respectively. (Here, Re and Rth are described by the equations $Re=(nx-ny) \cdot d$ and $Rth=((nx+ny)/2-nz) \cdot d$, where nx, ny, and nz are the principal refractive indices of the retardation plates and d is the thickness of the retardation plate. It should be noted that the definitions of nx, ny, nz, and d are the same as those stated earlier.)

Then, the viewing-angle dependency of the test cell P was measured in a conventional manner for the contrast ratio between two states, white display (an applied voltage of 0.2V) and black display (an applied voltage of 6.0V). A contrast ratio of 10 : 1 or more was attained over a range of 120° in the vertical direction and 130° in the horizontal direction.

As are clear from Examples 2 and 4, it was found that a liquid crystal display element used in a liquid crystal display device of the present example was an OCB mode liquid crystal display element exhibiting fast response and wide viewing angle characteristics, and the element did not require the splay-bend transition control.

In this example, as the alignment treatment method, a rubbing treatment, oblique evaporation, and optical alignment were employed, but even with the LB method, stamping, and monomolecular adsorption film deposition, the same effects were achieved.

In Example 4, the pretilt angles and the construction of the liquid crystal display device had top-bottom symmetry. However, even with a device having differing pretilt angles and constructions on the top and the bottom that was made by adjusting the viewing angle characteristics of contrast or brightness, the same effects were achieved.

EXAMPLE 5

A liquid crystal cell Q having the same construction as that of Fig. 1 was prepared as follows in a manner similar to that described in Example 1.

A polyimide resin for homeotropic alignment, SE1211, available from Nissan Chemical Industries, Ltd., was applied, by spin coating, over the whole surfaces of transparent electrodes 2 and 7 formed on two transparent substrates 1 and 8 composed of glass, and the resulting films were then dried and cured for one hour in a thermostatic bath at 180°C.

Then, a first alignment film and a second alignment film were subjected to a rubbing treatment in the direction shown in Fig. 3 so that predetermined pretilt angles having the same direction are induced in liquid crystal molecules at each film.

The substrates were bonded together using Struct Bond 352A, available from Mitsui Toatsu Chemicals, Inc., such that the first alignment film and the second alignment film were arranged in opposition, spacers 5, available from Sekisui Fine Chemical Corporation, being interposed between the substrates to provide a 3μm gap therebetween. Thus, a liquid crystal cell 9 (liquid crystal cell Q) was prepared.

Next, a liquid crystal ZLI-1083, available from Merck Japan, Ltd., was injected into the above-described liquid crystal cell Q by a vacuum filling method, and thus a test cell Q was obtained. In addition, a cell with homogeneous alignment was prepared and the pretilt angle was measured. With the rubbing conditions of the present example, the pretilt angle was 78°.

On the light source side and the viewer side of the liquid crystal cell Q, a retardation plate (with a retardation when viewed from the front Re=25nm) composed of a medium with a negative refractive index whose principal axis is in hybrid alignment, a negative uniaxial retardation plate (Re=3nm and Rth=105nm), and a polarizer were layered in sequence from the liquid crystal cell Q side. Thus, a test cell Q was prepared.

The test cell Q allowed for white display at a driving voltage of 1.5V and for black display at a driving voltage of 5.0V. In addition, the test cell P attained a contrast ratio of 180 : 1 when viewed from the front. Furthermore, excellent viewing angles were provided, i.e., 110° in the vertical direction and 160° in the horizontal direction.

EXAMPLE 6

A liquid crystal cell R having the same construction as that of Fig. 1 was prepared as follows in a manner similar to that described in Example 1.

A solution of $10^{-3}$mol/L, in which $C_6H_5$-CH=CH-CO-O-$(C_6H_4)$-O-$SiCl_3$ was mixed and dissolved in hexamethyldisiloxane, was applied, by spin coating, over the whole surfaces of transparent electrodes 2 and 7 formed on two transparent substrates 1 and 8 composed of glass in a dry air atmosphere, and the resulting films were then dried and cured for one hour in a thermostatic bath. Subsequently, the substrates were washed with chloroform, and then liquid was removed and the substrates were allowed to dry.

Then, a first alignment film and a second alignment film were irradiated with polarized UV light at different irradiation strengths and different irradiation angles so that predetermined pretilt angles having the same direction are induced in liquid crystal molecules at each film.

The substrates were bonded together using Struct Bond 352A, available from Mitsui Toatsu Chemicals, Inc., such that the first alignment film and the second alignment film were arranged in opposition, spacers 5, available from Sekisui Fine Chemical Corporation, being interposed between the substrates to provide a 3μm gap therebetween. Thus, a liquid crystal cell 9 (liquid crystal cell R) was prepared.

Next, a liquid crystal ZLI-1083, available from Merck Japan, Ltd., was injected into the above-described liquid crystal cell R by a vacuum filling method, and thus a test cell R was obtained. In addition, a cell with homogeneous alignment was prepared and the pretilt angles were measured. With the conditions of the present example, the pretilt angle of the first substrate 1 was 30° and the pretilt angle of the second substrate 8 was 65°.

On the liquid crystal cell R, polarizers and retardation plates composed of a medium with a negative refractive index whose principal axes are in hybrid alignment were layered, and thus a test cell R was prepared. The test cell R obtained viewing angle characteristics in which the viewing angle was symmetrical at 120° in the vertical and horizontal directions.

Use of chemisorption was effective in obtaining liquid crystal display devices with a medium pretilt angle. In addition, by adjusting the irradiation conditions of polarized UV light, the substrates having different pretilt angles were easily obtained. Particularly, silane compounds having a chalcone skeleton were effective.

Even by rubbing and a method whereby an organic thin film is layered on a thin film composed of an inorganic compound, a liquid crystal cell was manufactured in which the pretilt angle on one substrate and the pretilt angle on the other substrate are in the range of from 15° to less than 90°, and in which the pretilt angles differ from each other. This liquid crystal cell also obtained viewing angle characteristics in which the viewing angle was symmetrical in the vertical and horizontal directions.

EXAMPLE 7

A liquid crystal cell S was prepared in a manner similar to that described in Example 6, except that the irradiation conditions of polarized UV light was different.

The substrates were bonded together using Struct Bond 352A, available from Mitsui Toatsu Chemicals, Inc., such that a first alignment film and a second alignment film were arranged in opposition, spacers 5, available from Sekisui Fine Chemical Corporation, being interposed between the substrates to provide a 2.5μm gap therebetween. Thus, a liquid crystal cell 9 (liquid crystal cell S) was prepared.

Then, a liquid crystal ZLI-1083, available from Merck Japan, Ltd., was injected into the above-described liquid crystal cell S by a vacuum filling method, and thus a test cell S was obtained.

The initial alignment state of the liquid crystal molecules of the test cell S was observed. The liquid crystal molecules were in bend alignment in the initial alignment state and therefore did not require transition from splay alignment to bend alignment.

In addition, a cell with homogeneous alignment was prepared and the pretilt angle was measured. With the conditions of the present example, the pretilt angle of the first substrate 1 was 8° and the pretilt angle of the second substrate 8 was 82°.

Next, the response time between two states was measured by applying a voltage of 2.0V and a voltage of 2.4V The rise time of response was 0.6 msec and the fall time of response was 1.1 msec.

Even by rubbing and a method whereby an organic thin film is layered on a thin film composed of an inorganic compound, a liquid crystal cell was manufactured in which the pretilt angle on one substrate is in the range of from 15° to less than 90° and the pretilt angle on the other substrate is less than 15°. This liquid crystal cell also did not require transition from splay alignment to bend alignment or accomplished bend transition in a short time. In addition, a fast and excellent response time was provided.

INDUSTRIAL APPLICABILITY

As has been described thus far, according to the present invention, by carrying out a parallel alignment treatment on the alignment films capable of providing pretilt angles in the range of from 15° to less than 90° to liquid crystal molecules, it is possible to provide liquid crystal display devices with fast transition times in which bend alignment is easily obtained by applying voltages of a few volts. In addition, it is also possible to provide liquid crystal display devices that do not require transition control. Furthermore, as the devices have excellent viewing angle characteristics, highly practical OCB mode liquid crystal display devices can be provided. Thus, the value of the present invention to industry is considerable.

**Claims**

1. A liquid crystal display device comprising a liquid crystal cell having a first electrode arranged on a first transparent substrate, a second electrode arranged on a second transparent substrate, a first alignment film and a second alignment film covering the first electrode and the second electrode, respectively, the first alignment film and the second alignment film having been subjected to a parallel alignment treatment such that predetermined pretilt angles having the same direction are induced in liquid crystal molecules at each film, and a liquid crystal layer enclosed between the first substrate and the second substrate, display being brought about by providing bend alignment to the liquid crystal to change light transmissivity,

wherein the pretilt angle of at least one of the first alignment film and the second alignment film is in the range of from 15° to less than 90°.

2. A liquid crystal display device according to claim 1, wherein the pretilt angle of the first alignment film and the pretilt angle of the second alignment film are equal.

3. A liquid crystal display device according to claims 1 or 2, wherein a phase compensator is arranged on at least one of the first electrode side and the second electrode side, the phase compensator optically compensating for liquid crystal alignment.

4. A liquid crystal display device according to claim 3, wherein the phase compensator is selected from the group consisting of a negative uniaxial retardation plate and a biaxial retardation plate.

5. A liquid crystal display device according to claim 3, wherein the phase compensator is a negative uniaxial retardation plate, the retardation plate having a retardation of less than 30nm when viewed from the front, the principal axis of the retardation plate being tilted.

6. A method of manufacturing a liquid crystal display device that changes light transmissivity to bring about display by providing bend alignment to liquid crystal provided between a pair of substrates, each of the substrates having an electrode and an alignment film arranged thereon, the method comprising the steps of:

forming an alignment film by forming a first thin film on each of the pair of substrates by obliquely evaporating an inorganic compound and forming a second thin film on each of the first thin films, the second thin films being composed of an organic compound;
carrying out an alignment treatment on each of the second thin films;
bonding the pair of substrates together such that the alignment treatment directions of the alignment films are substantially parallel to each other; and
injecting the liquid crystal between the pair of substrates to form a liquid crystal layer;
whereby the pretilt angles of liquid crystal molecules from the planes of the pair of substrates are set in the range of from 15° to less than 90°.

7. A method of manufacturing a liquid crystal display device according to claim 6, wherein the alignment treatment is carried out so that the second thin films have a pretilt angle of 5° or more with respect to the film surfaces of the first thin films.

8. A method of manufacturing a liquid crystal display device according to claims 6 or 7, wherein the organic compound forming the second thin films is a polyimide resin.

9. A method of manufacturing a liquid crystal display device according to claims 6, 7, or 8, wherein the second thin films are formed by chemisorption.

10. A method of manufacturing a liquid crystal display device according to claims 6, 7, or 8, wherein the second thin films are formed by the LB method.

11. A method of manufacturing a liquid crystal display device that changes light transmissivity to bring about display by providing bend alignment to liquid crystal provided between a pair of substrates, each of the substrates having an electrode and an alignment film arranged thereon, the method comprising the steps of:

forming a thin film on each of the pair of substrates, the thin films being composed of an organic compound;
carrying out an alignment treatment by irradiating each of the thin films with light;
bonding the pair of substrates together such that the alignment treatment directions of the alignment films are substantially parallel to each other; and
injecting the liquid crystal between the pair of substrates to form a liquid crystal layer;
whereby the pretilt angles of liquid crystal molecules from the planes of the pair of substrates are set in the range of from 15° to less than 90°.

**12.** A method of manufacturing a liquid crystal display device that changes light transmissivity to bring about display by providing bend alignment to liquid crystal provided between a pair of substrates, each of the substrates having an electrode and an alignment film arranged thereon, the method comprising the steps of:

forming a thin film on each of the pair of substrates, the thin films being composed of an organic compound; carrying out an alignment treatment on each of the thin films under differing irradiation conditions; bonding the pair of substrates together such that the alignment treatment directions of the alignment films are substantially parallel to each other; and injecting the liquid crystal between the pair of substrates to form a liquid crystal layer; whereby the pretilt angle of liquid crystal molecules from the plane of at least one of the pair of substrates is set in the range of from 15° to less than 90°.

**13.** A method of manufacturing a liquid crystal display device that changes light transmissivity to bring about display by providing bend alignment to liquid crystal provided between a pair of substrates, each of the substrates having an electrode and an alignment film arranged thereon, the method comprising the steps of:

forming a thin film on each of the pair of substrates, the thin films being composed of an organic compound; carrying out an alignment treatment on each of the thin films by rubbing; bonding the pair of substrates together such that the alignment treatment directions of the alignment films are substantially parallel to each other; and injecting the liquid crystal between the pair of substrates to form a liquid crystal layer; whereby the pretilt angles of liquid crystal molecules from the planes of the pair of substrates are set in the range of from 15° to less than 90°.

**14.** A method of manufacturing a liquid crystal display device that changes light transmissivity to bring about display by providing bend alignment to liquid crystal provided between a pair of substrates, each of the substrates having an electrode and an alignment film arranged thereon, the method comprising the steps of:

forming a thin film on each of the pair of substrates, the thin films being composed of an organic compound; carrying out an alignment treatment under differing rubbing conditions on each of the thin films by rubbing; bonding the pair of substrates together such that the alignment treatment directions of the alignment films are substantially parallel to each other; and injecting the liquid crystal between the pair of substrates to form a liquid crystal layer; whereby the pretilt angle of liquid crystal molecules from the plane of at least one of the pair of substrates is set in the range of from 15° to less than 90°.

**15.** A method of manufacturing a liquid crystal display device according to claims 11, 12, 13, or 14, wherein the organic compound forming the alignment films is a polyimide resin.

**16.** A method of manufacturing a liquid crystal display device that changes light transmissivity to bring about display by providing bend alignment to liquid crystal provided between a pair of substrates, each of the substrates having an electrode and an alignment film arranged thereon, the method comprising the steps of:

forming a thin film on each of the pair of substrates by contacting the surfaces of the pair of substrates with a chemisorbent material having a photosensitive group to chemisorb the chemisorbent material onto the surfaces of the pair of substrates; carrying out an alignment treatment by irradiating each of the thin films with polarized light; bonding the pair of substrates together such that the alignment treatment directions of the alignment films are substantially parallel to each other; and injecting the liquid crystal between the pair of substrates to form a liquid crystal layer; whereby the pretilt angles of liquid crystal molecules from the planes of the pair of substrates are set in the range of from 15° to less than 90°.

**17.** A method of manufacturing a liquid crystal display device that changes light transmissivity to bring about display by providing bend alignment to liquid crystal provided between a pair of substrates, each of the substrates having an electrode and an alignment film arranged thereon, the method comprising the steps of:

forming a thin film on each of the pair of substrates by contacting the surfaces of the pair of substrates with a chemisorbent material having a photosensitive group to chemisorb the chemisorbent material onto the surfaces of the pair of substrates;

carrying out an alignment treatment by irradiating each of the thin films with polarized light under differing irradiation conditions;

bonding the pair of substrates together such that the alignment treatment directions of the alignment films are substantially parallel to each other; and

injecting the liquid crystal between the pair of substrates to form a liquid crystal layer;

whereby the pretilt angle of liquid crystal molecules from the plane of at least one of the pair of substrates is set in the range of from 15° to less than 90°.

**Amended claims under Art.19.1 PCT**

1.  (Amended) A liquid crystal display device comprising a liquid crystal cell having a first electrode arranged on a first transparent substrate, a second electrode arranged on a second transparent substrate, a first alignment film and a second alignment film covering the first electrode and the second electrode, respectively, the first alignment film and the second alignment film having been subjected to a parallel alignment treatment such that predetermined pretilt angles having the same direction are induced in liquid crystal molecules at each film, and a liquid crystal layer enclosed between the first substrate and the second substrate, display being brought about by providing bend alignment to the liquid crystal to change light transmissivity,

    wherein the pretilt angle of at least one of the first alignment film and the second alignment film is in the range of from 15° to less than 45°.

2.  (Amended) A liquid crystal display device according to claim 1,
    wherein the pretilt angle of at least one of the first alignment film and the second alignment film is in the range of from 15° to 40°.

3.  (Amended) A liquid crystal display device according to claim 1,
    wherein the pretilt angle of at least one of the first alignment film and the second alignment film is in the range of from 22° to 40°.

4.  (Amended) A liquid crystal display device according to claim 1,
    wherein the pretilt angle of at least one of the first alignment film and the second alignment film is in the range of from 32° to 40°.

5.  (Amended) A liquid crystal display device according to claim 1,
    wherein the liquid crystal is in splay alignment in an initial alignment state.

6.  (Amended) Aliquid crystal display device according to claims 1, 2, 3, 4, or 5, wherein the pretilt angle of the first alignment film and the pretilt angle of the second alignment film are equal.

7.  (Amended) A liquid crystal display device according to claims 1, 2, 3, 4, 5, or 6, wherein a phase compensator is arranged on at least one of the first electrode side and the second electrode side, the phase compensator optically compensating for liquid crystal alignment.

8.  (Amended) A liquid crystal display device according to claim 7,
    wherein the phase compensator is selected from the group consisting of a negative uniaxial retardation plate and a biaxial retardation plate.

9.  (Amended) A liquid crystal display device according to claim 7,
    wherein the phase compensator is a negative uniaxial retardation plate, the retardation plate having a retardation of less than 30nm when viewed from the front, the principal axis of the retardation plate being tilted.

10. (Amended) A method of manufacturing a liquid crystal display device that changes light transmissivity to bring about display by providing bend alignment to liquid crystal provided between a pair of substrates, each of the substrates having an electrode and an alignment film arranged thereon, the method comprising the steps of:

    forming an alignment film by forming a first thin film on each of the pair of substrates by obliquely evaporating an inorganic compound and forming a second thin film on each of the first thin films, the second thin films being composed of an organic compound;

carrying out an alignment treatment on each of the second thin films;

bonding the pair of substrates together such that the alignment treatment directions of the alignment films are substantially parallel to each other; and

injecting the liquid crystal between the pair of substrates to form a liquid crystal layer;

whereby the pretilt angles of liquid crystal molecules from the planes of the pair of substrates are set in the range of from 15° to less than 90°.

11. (Amended) A method of manufacturing a liquid crystal display device according to claim 10, wherein the alignment treatment is carried out so that the second thin films have a pretilt angle of 5° or more with respect to the film surfaces of the first thin films.

12. (Amended) A method of manufacturing a liquid crystal display device according to claims 10 or 11, wherein the organic compound forming the second thin films is a polyimide resin.

13. (Amended) A method of manufacturing a liquid crystal display device according to claims 10, 11, or 12, wherein the second thin films are formed by chemisorption.

14. (Amended) A method of manufacturing a liquid crystal display device according to claims 10, 11, or 12, wherein the second thin films are formed by the LB method.

15. (Amended) A method of manufacturing a liquid crystal display device that changes light transmissivity to bring about display by providing bend alignment to liquid crystal provided between a pair of substrates, each of the substrates having an electrode and an alignment film arranged thereon, the method comprising the steps of:

forming a thin film on each of the pair of substrates, the thin films being composed of an organic compound;

carrying out an alignment treatment by irradiating each of the thin films with light;

bonding the pair of substrates together such that the alignment treatment directions of the alignment films are substantially parallel to each other; and

injecting the liquid crystal between the pair of substrates to form a liquid crystal layer;

whereby the pretilt angles of liquid crystal molecules from the planes of the pair of substrates are set in the range of from 15° to less than 45°.

16. (Amended) A method of manufacturing a liquid crystal display device according to claim 15, wherein the pretilt angles of the liquid crystal molecules from the planes of the pair of substrates are set in the range of from 15° to 40°.

17. (Amended) A method of manufacturing a liquid crystal display device according to claim 15, wherein the pretilt angles of the liquid crystal molecules from the planes of the pair of substrates are set in the range of from 22° to 40°.

18. (Added) A method of manufacturing a liquid crystal display device according to claim 15, wherein the pretilt angles of the liquid crystal molecules from the planes of the pair of substrates are set in the range of from 32° to 40°.

19. (Added) A method of manufacturing a liquid crystal display device according to claim 15, wherein the liquid crystal is in splay alignment in an initial alignment state.

20. (Added) A method of manufacturing a liquid crystal display device that changes light transmissivity to bring about display by providing bend alignment to liquid crystal provided between a pair of substrates, each of the substrates having an electrode and an alignment film arranged thereon, the method comprising the steps of :

forming a thin film on each of the pair of substrates, the thin films being composed of an organic compound;

carrying out an alignment treatment on each of the thin films under differing irradiation conditions;

bonding the pair of substrates together such that the alignment treatment directions of the alignment films are substantially parallel to each other; and

injecting the liquid crystal between the pair of substrates to form a liquid crystal layer;

whereby the pretilt angle of liquid crystal molecules from the plane of at least one of the pair of substrates is set in the range of from 15° to less than 90°.

21. (Added) A method of manufacturing a liquid crystal display device that changes light transmissivity to bring about display by providing bend alignment to liquid crystal provided between a pair of substrates, each of the substrates having an electrode and an alignment film arranged thereon, the method comprising the steps of:

forming a thin film on each of the pair of substrates, the thin films being composed of an organic compound; carrying out an alignment treatment on each of the thin films by rubbing; bonding the pair of substrates together such that the alignment treatment directions of the alignment films are substantially parallel to each other; and injecting the liquid crystal between the pair of substrates to form a liquid crystal layer; whereby the pretilt angles of liquid crystal molecules from the planes of the pair of substrates are set in the range of from 15° to less than 90°.

22. (Added) A method of manufacturing a liquid crystal display device that changes light transmissivity to bring about display by providing bend alignment to liquid crystal provided between a pair of substrates, each of the substrates having an electrode and an alignment film arranged thereon, the method comprising the steps of:

forming a thin film on each of the pair of substrates, the thin films being composed of an organic compound; carrying out an alignment treatment under differing rubbing conditions on each of the thin films by rubbing; bonding the pair of substrates together such that the alignment treatment directions of the alignment films are substantially parallel to each other; and injecting the liquid crystal between the pair of substrates to form a liquid crystal layer; whereby the pretilt angle of liquid crystal molecules from the plane of at least one of the pair of substrates is set in the range of from 15° to less than 90°.

23. (Added) A method of manufacturing a liquid crystal display device according to claims 15, 16, 17, 18, 19, 20, 21, or 22, wherein the organic compound forming the alignment films is a polyimide resin.

24. (Added) A method of manufacturing a liquid crystal display device that changes light transmissivity to bring about display by providing bend alignment to liquid crystal provided between a pair of substrates, each of the substrates having an electrode and an alignment film arranged thereon, the method comprising the steps of:

forming a thin film on each of the pair of substrates by contacting the surfaces of the pair of substrates with a chemisorbent material having a photosensitive group to chemisorb the chemisorbent material onto the surfaces of the pair of substrates; carrying out an alignment treatment by irradiating each of the thin films with polarized light; bonding the pair of substrates together such that the alignment treatment directions of the alignment films are substantially parallel to each other; and injecting the liquid crystal between the pair of substrates to form a liquid crystal layer; whereby the pretilt angles of liquid crystal molecules from the planes of the pair of substrates are set in the range of from 15° to less than 90°.

25. (Added) A method of manufacturing a liquid crystal display device that changes light transmissivity to bring about display by providing bend alignment to liquid crystal provided between a pair of substrates, each of the substrates having an electrode and an alignment film arranged thereon, the method comprising the steps of:

forming a thin film on each of the pair of substrates by contacting the surfaces of the pair of substrates with a chemisorbent material having a photosensitive group to chemisorb the chemisorbent material onto the surfaces of the pair of substrates; carrying out an alignment treatment by irradiating each of the thin films with polarized light under differing irradiation conditions; bonding the pair of substrates together such that the alignment treatment directions of the alignment films are substantially parallel to each other; and injecting the liquid crystal between the pair of substrates to form a liquid crystal layer; whereby the pretilt angle of liquid crystal molecules from the plane of at least one of the pair of substrates is set in the range of from 15° to less than 90°.

**BRIEF STATEMENT UNDER ARTICLE 19 (1)**

Claims 1 and 11 have been amended to narrow the range of the pretilt angles. These amendments were made to distinguish the range of the pretilt angles of the invention from that of the prior art. The range of the pretilt angles has been amended based on the data of Example 1.

Further, Claims 2 to 5 and Claims 16 to 19 are appended to Claim 1 and Claim 11, respectively. Claims 2 to 4 and Claims 16 to 18 specify a preferable range of the pretilt angles in accordance with Example 1.

In the range of pretilt angles of Claims 1 to 4 and Claims 15 to 18, the liquid crystal is in splay alignment in the initial alignment state and the transition time from splay alignment to bend alignment can be reduced. In particular, when the pretilt angle is set in the range of from 22° to 40°, the transition time from splay alignment to bend alignment can be reduced to less than 100 seconds, and when the pretilt angle is set in the range of from 32° to 40°, the transition time from splay alignment to bend alignment can be reduced to less than 10 seconds. There is no disclosure in the prior art concerning controlling the transition time from splay alignment to bend alignment by specifying pretilt angles.

Moreover, Claims 5 and 19 specify that the liquid crystal is in splay alignment in the initial alignment state. By the amendments, it has become clear that liquid crystal display devices of the invention have the advantageous effects, not been disclosed in the prior art, of reducing the transition time from splay alignment to bend alignment.

Fig. 1

Fig. 2

Fig. 3

Fig. 4

Fig. 5

Fig. 6

Fig. 7

| **INTERNATIONAL SEARCH REPORT** | International application No. |
|---|---|
| | PCT/JP01/00986 |

A. CLASSIFICATION OF SUBJECT MATTER
 Int.Cl⁷   G02F1/1337, G02F1/137

According to International Patent Classification (IPC) or to both national classification and IPC

B. FIELDS SEARCHED

Minimum documentation searched (classification system followed by classification symbols)
 Int.Cl⁷   G02F1/1337, G02F1/137

Documentation searched other than minimum documentation to the extent that such documents are included in the fields searched
 Jitsuyo Shinan Koho          1922-1996     Toroku Jitsuyo Shinan Koho   1994-2001
 Kokai Jitsuyo Shinan Koho   1971-2001     Jitsuyo Shinan Toroku Koho   1996-2001

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP, 5-303099, A (Matsushita Electric Ind. Co., Ltd.),<br>16 November, 1993 (16.11.93),<br>Par. Nos. [0033]-[0035]; Fig. 9<br>Par. Nos. [0033]-[0035]; Fig. 9   (Family: none) | 1-3,13,15<br>4-10,14 |
| X<br>Y | US, 5882238, A (LG Electronics Inc.),<br>16 March, 1999 (16.03.99),<br>Full text; all drawings<br>Full text; all drawings<br>& JP, 9-179124, A | 1-3,11<br>4-5,12,15-17 |
| Y | JP, 9-222511, A (NIPPON OIL COMPANY, LTD.),<br>26 August, 1997 (26.08.97),<br>Par. Nos. [0072], [0097]   (Family: none) | 4-5 |
| Y | JP, 3-259116, A (Pioneer Electronic Corporation),<br>19 November, 1991 (19.11.91),<br>Full text   (Family: none) | 6-10 |
| Y | JP, 11-311788, A (Toshiba Corporation),<br>09 November, 1999 (09.11.99), | 8,12,14-15,<br>17 |

☒ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br> 05 April, 2001 (05.04.01) | Date of mailing of the international search report<br> 17 April, 2001 (17.04.01) |
|---|---|
| Name and mailing address of the ISA/<br> Japanese Patent Office | Authorized officer |
| Facsimile No. | Telephone No. |

Form PCT/ISA/210 (second sheet) (July 1992)

# EP 1 172 685 A1

## INTERNATIONAL SEARCH REPORT

International application No.

PCT/JP01/00986

C (Continuation). DOCUMENTS CONSIDERED TO BE RELEVANT

| Category* | Citation of document, with indication, where appropriate, of the relevant passages | Relevant to claim No. |
|---|---|---|
| | Par. Nos. [0048]-[0055], [0058] to [0059], [0063] (Family: none) | |
| Y | JP, 10-168195, A (Matsushita Electric Ind. Co., Ltd.), 23 June, 1998 (23.06.98), Full text; all drawings (Family: none) | 9,16-17 |
| Y | JP, 62-212625, A (Seiko Epson Corporation), 18 September, 1987 (18.09.87), Full text (Family: none) | 10 |

Form PCT/ISA/210 (continuation of second sheet) (July 1992)